# EUROPEAN PATENT APPLICATION

(11) **EP 3 649 846 A1**
(43) Date of publication of application: **13.05.2020**
(21) Application number: 19207387.2
(22) Date of filing: 06.11.2019
(51) Int. Cl.: A01G 13/02

(54) **REMOVABLE COVERING SYSTEM FOR FRUIT CROPS OR THE LIKE**

(30) Priority: 07.11.2018 IT 201800010135
(71) Applicant: Bonetti, Enrico, 41058 Vignola (MO) (IT)
(72) Inventor: Bonetti, Enrico, 41058 Vignola (MO) (IT)
(74) Representative: Grana, Daniele

(57) **Abstract**

The removable covering system (1) for fruit crops or the like comprises a series of sustaining elements (2) arranged spaced apart from each other and substantially aligned along a row (F) of a fruit crop or the like to be protected, covering means (3) supported by the sustaining elements (2) and movement means (4) of the covering means (3) for the positioning on top of the row (F), wherein the covering means (3) comprise a plurality of sheets (5) arranged sequentially along the row (F), operatively connected to the movement means (4) and movable between an extended position, in which each of the sheets (5) extends along a respective section of the row (F) to define a substantially continuous covering over the entire row (F), and a retracted position, in which each of the sheets (5) is retracted at a respective section the row (F) and the row (F) is substantially uncovered.

## Description

The present invention relates to a removable covering system for fruit crops or the like.

With particular reference to the growing of fruit trees of any type, the need is known and felt to protect the fruit from rain and weather in general.

In fact, weather conditions can have a considerable impact on the quality of fruit, even ruining entire crops.

With reference to the growing of cherries, e.g., even the simple rain can cause the breaking of the fruit, resulting in considerable damage to the entire crop. Moreover, the problem is even more acute in the case of organic farming, since in this case a high quality of product must be achieved while minimizing the operations on growing.

To overcome this drawback, a first known solution involves the use of special fixed covers, mainly consisting of plastic sheets, suitably arranged to protect against rain and bad weather in general.

However, there are major drawbacks to this solution.

In fact, the presence of a fixed cover causes a delay in ripening as the fruit is never directly exposed to the sun. This usually results in a fruit worse taste.

In addition, the presence of a fixed cover can lead to the proliferation of mold, with the consequent need to use chemical products.

In order to overcome these drawbacks, movable covers are known to be positioned on the crop in case of need.

Usually, these covers consist of a plurality of sheets, one for each row of trees, in which each of the sheets extends along the entire length of the row once stretched out.

However, this solution also has some drawbacks.

In particular, the operations required to stretch the sheets out along the entire length of the rows are generally difficult in terms of time required and personnel involved.

Therefore, the long times for the complete positioning of the sheets do not allow to intervene promptly in case of rain or bad weather in general, thus causing damage to part of the crop.

In addition, if one of the sheets breaks, the coverage of an entire row is affected. Finally, in the event of damage or breakage of one of the sheets, the time required to put the covering system back into operation is not negligible.

The need to reduce the time required to position and remove the sheets along the rows is therefore well known.

To achieve this object, document BO2015A000117 describes a protection structure for the coverage of plant crops comprising vertical support posts positioned along the rows and aligned transversely in a close or staggered manner and a reticular structure of cables capable of supporting longitudinally at least one protection sheet on each row.

In addition, this solution involves the use of movement means for moving the cover sheets along a direction transverse to their longitudinal extension, to move from a coverage position of the rows, with the formation on these of a fly sheet transverse cover, to an opening position of the same rows, in which each sheet is retracted transversely in a bellows fashion.

However, this solution also has some drawbacks.

In particular, this solution involves the use of sheets that, once stretched out, extend along the entire length of the rows.

This necessarily involves the use of complex movement means which are dedicated to each sheet, with a consequent considerable complexity of the entire covering system.

In addition, the use of very long individual sheets makes considerably more difficult the maintenance and replacement operations thereof.

The main aim of the present invention is to devise a removable covering system for fruit crops or the like that allows simplifying and speeding up the positioning and removal operations of covers.

Another object of the present invention is to devise a removable covering system for fruit crops or the like that allows simplifying and speeding up the maintenance and replacement operations of covers.

Another object of the present invention is to devise a removable covering system for fruit crops or the like that allows overcoming the aforementioned drawbacks of the prior art in the context of a simple, rational, easy, effective to use and low cost solution.

The aforementioned objects are achieved by the present removable covering system for fruit crops or the like according to the characteristics described in claim 1.

Other characteristics and advantages of the present invention will be more evident from the description of several preferred, but not exclusive, embodiments of a removable covering system for fruit crops or the like, illustrated as an indication, but not limited to, in the attached tables of drawings in which:
Figure 1 is a schematic and axonometric view of a covering system according to the invention installed on a fruit tree crop;
Figure 2 is a schematic and axonometric view of the covering system according to the invention applied to an individual row of trees and with the sheets in the extended position;
Figure 3 is a schematic and axonometric view of the covering system according to the invention applied to an individual row of trees and with the sheets in the retracted position;
Figures 4, 5 and 6 show another possible embodiment of the covering system according to the invention;
Figures 7 and 8 show a further possible embodiment of the covering system according to the invention.

With particular reference to these illustrations, reference numeral 1 globally indicates a removable covering system for fruit crops or the like.

For example, the system 1 according to the invention is particularly useful when used in fruit trees crops that are very sensitive to the changes in weather conditions, such as cherry or grape crops.

In particular, the system 1 according to the invention is particularly effective if used for all those organic crops that require a high quality of the final product and limited interventions on the crop.

Different applications of the system 1 in agriculture for the protection of plant crops in general cannot however be ruled out.

The system 1 comprises a series of sustaining elements 2 arranged spaced apart from each other and substantially aligned along at least one row F of a fruit crop or the like to be protected.

Preferably, the sustaining elements 2 are arranged in sequence along the row F and are all arranged at the same distance from each other.

The system 1 also comprises covering means 3 supported by the sustaining elements 2 and movement means 4 of the covering means 3 for the automated positioning on top of the rows F.

Therefore, the movement means 4 can be operated to position or remove the covering means 3 of the rows F according to the particular weather conditions and needs.

Advantageously, the covering means 3 comprise a plurality of sheets 5 arranged sequentially along each row F.

The sheets 5 are operationally connected to the movement means 4 and are movable between:
- an extended position, in which each of the sheets 5 extends along a respective section of the row F to define a substantially continuous coverage over the entire row, and
- a retracted position, in which each of the sheets 5 is retracted at or in the proximity of a respective section of the row F and the row F is completely uncovered.

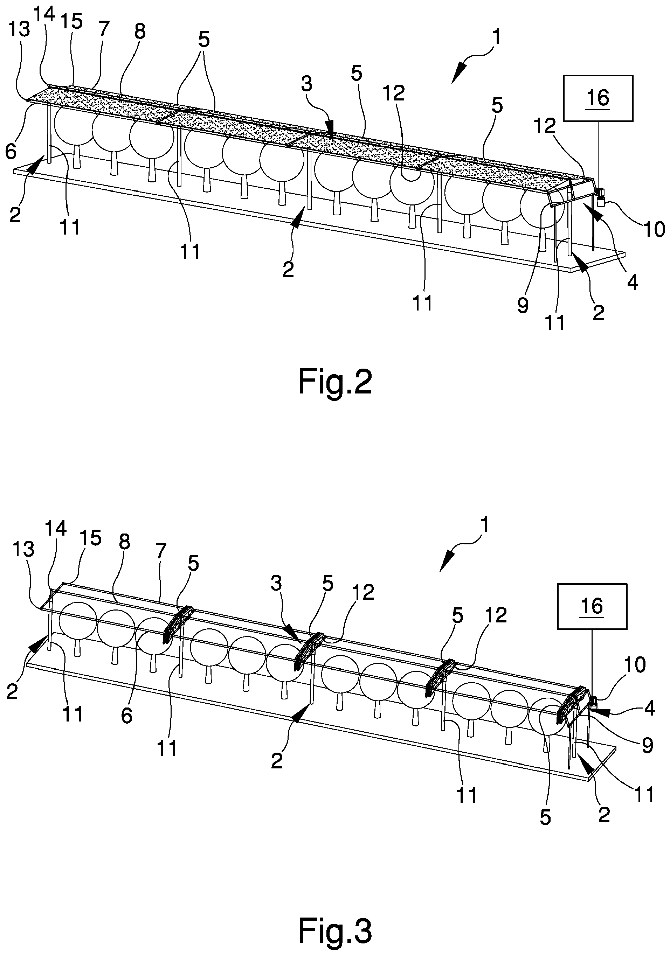

Therefore, since the coverage on an entire row F is made by means of a sequence of several sheets 5 that can be controlled simultaneously and of relatively small size, the coverage itself can be positioned and removed simply and in a very short time even for rows F that extend over long distances. Preferably, the movement means 4 move the sheets 5 between the extended position (as shown, for example, in Figure 2) and the retracted position (as shown, for example, in Figure 3) along the direction of extension of the row F.

This way, using the same movement means 4 it is possible to move all the sheets 5 (or in any case several sheets 5) arranged on an individual row F.

In particular, the movement means 4 comprises at least one cable 6, 7, 8 supported in a sliding manner by the sustaining elements 2 and associated with each of the sheets 5.

In addition, the movement means 4 comprise traction means 9, 10 of said at least one cable 6, 7, 8 for the positioning of the sheets 5 between the extracted position and the retracted position.

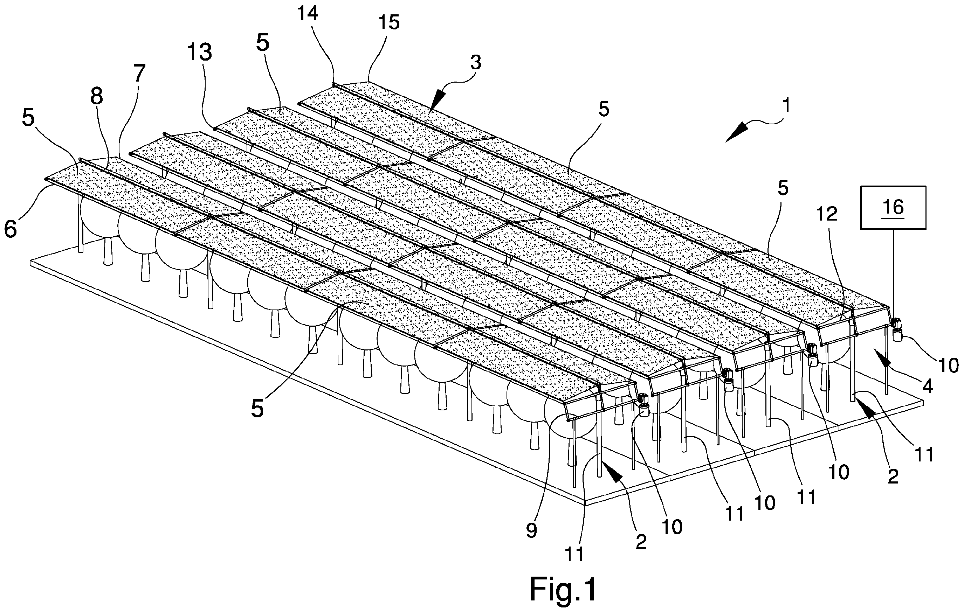

According to a possible embodiment of the system 1, shown in Figures 1, 2 and 3, each of the sheets 5 has one end fixed to a respective sustaining element 2 of the series of sustaining elements and one opposite end fixed to at least one cable 6,7,8.

In addition, each of the sheets 5 associated with the series of sustaining elements 2 and arranged on the same row F has the same size.

For example, according to a possible embodiment, each sheet 5 is 4-5 m wide and 10 m long. Sheets 5 of different size cannot however be ruled out.

The traction means 9, 10 can comprise, e.g., an axially rotatable drum 9 and at least one motor 10 for driving the drum 9 in rotation.

Different embodiments of the traction means 9,10 cannot however be ruled out. In this case, at least one cable 6, 7, 8 is partly wound around the drum 9 and the motor 10 is adapted to drive the drum 9 in rotation in one direction to bring the sheets 5 from the retracted position to the extended position and in the opposite direction to bring the sheets 5 from the extended position to the retracted position.

With reference to a preferred embodiment, the movement means 4 comprise a first cable 6 associated with a first lateral portion of each of the sheets 5 arranged along an individual row F, and a second cable 7 associated with a second lateral portion of the sheets 5. Preferably, the long sides of the sheets 5 are provided with support and guidance means, such as eyelets or trolleys, adapted to allow sliding on the first cable 6 and on the second cable 7.

Also according to a preferred embodiment, illustrated in the figures, the movement means 4 comprise a third cable 8 associated with a substantially intermediate portion of each of the sheets 5 arranged along an individual row F. Conveniently, the third cable 8 is positioned at a higher level than the first cable 6 and the second cable 7. This way, once extended, each of the sheets 5 forms a double slope for the outflow of water to the sides of the row F.

Conveniently, according to a possible embodiment, the first cable 6, the second cable 7 and the third cable 8 are partly wound around an individual drum 9 and are operable in traction at the same time by means of an individual motor 10. Alternative embodiments cannot however be ruled out.

For example, the movement means 4 may comprise a drum and a respective motor for each of the cables 6, 7, 8.

The cables are preferably made of steel.

According to a preferred embodiment, each of the sustaining elements 2 comprises at least one vertical sustaining pole 11.

In addition, each of the sustaining elements 2 comprises at least one upper structure 12, supported by the pole 11, provided with fixing points for fixing the sheets 5.

Preferably, the upper structure 12 comprises sliding means 13, 14, 15 for sliding at least one cable 6, 7, 8.

For example, such sliding means 13, 14, 15 may be made up of at least one pulley.

In particular, with reference to a possible embodiment shown in the illustrations, the upper structure 12 extends along a substantially horizontal direction and comprises a first end provided with a first pulley 13 for the sliding of the first cable 6 and a second end provided with a second pulley 14 for the sliding of the second cable 7.

Preferably, the upper structure 12 comprises a rod which is transverse to the pole 11.

In addition, the upper structure 12 comprises a substantially intermediate portion provided with a third pulley 15 for the sliding of the third cable 8. Preferably, the first and the second pulleys 13 and 14 are arranged substantially at the same height while the third pulley 15 is arranged at a higher level relative to the first and second pulleys to define a fly sheet cover when the sheets 5 are extended.

Preferably, according to a possible embodiment, the cables 6, 7, 8 are closed in a loop and partly wound around the drum 9 and the pulleys 13, 14, 15 of the last of the sustaining elements 2, at the opposite end of the row F relative to the drum itself. Each cable 6, 7, 8 is twice as long as the distance between the drum 9 and the last opposite sustaining element 2 plus the length of each of the sheets 5.

This way, each cable 6, 7, 8 actually makes up a pair of cables that cross the entire row F and that are movable along opposite directions.

In addition, different solutions cannot be ruled out in which, for example, each individual cable 6, 7, 8 wound in a loop is replaced by respective pairs of cables parallel to each other and operationally connected to the movement means 4.

In this case, the movement means 4 comprise a pair of drums 9 operationally connected to their respective motors 10 and arranged at the opposite ends of the row F.

Therefore, in this case the individual cables 6, 7, 8 are not closed in a loop and their ends are partially wound around the drums. The movement of the sheets 5 between the extended position and the retracted position is given by the traction of one or the other drum 9.

Advantageously, the system 1 also comprises at least one weather control unit 16 operationally connected to the movement means 4 and configured to automatically control the movement of the sheets 5 between the extended position and the retracted position.

In particular, the weather control unit 16 is configured so as to bring the sheets 5 from the retracted position to the extended position in case of rain.

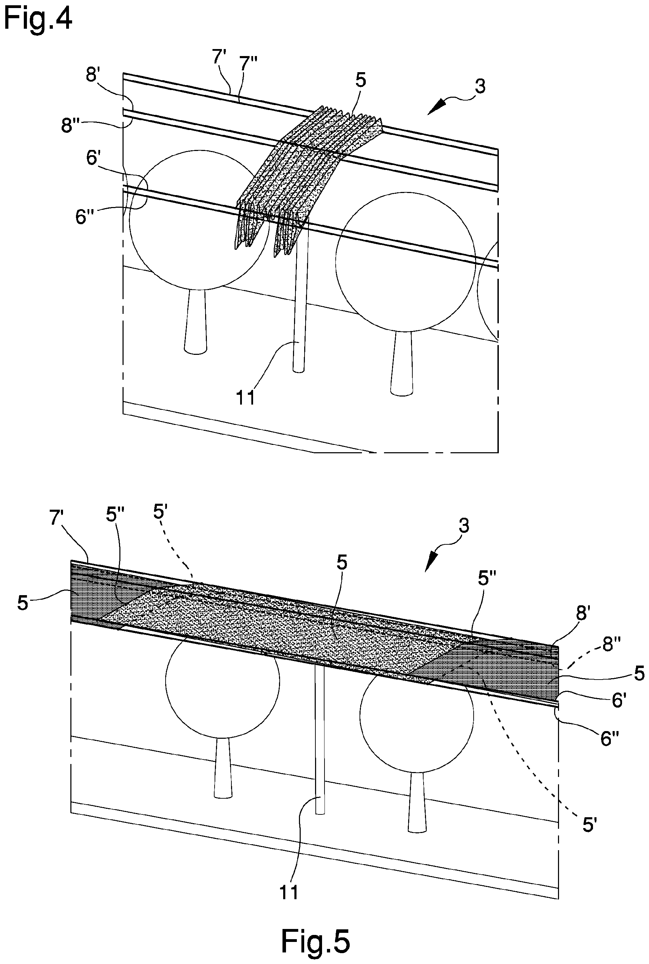

With reference to a second possible embodiment, shown in Figures 4, 5 and 6 each of the sheets 5 has:
- a first end 5' connected to the upper cables 6', 7', 8' of the pairs of cables 6, 7, 8 movable along a first direction and
- a second end 5" connected to the lower cables 6", 7", 8" of the pairs of cables 6, 7, 8 movable along a second direction opposite the first direction.

This way, during the movement of the pairs of cables 6, 7, 8, both ends 5', 5" of each of the sheets 5 are moved along opposite directions, thus halving the opening and closing times of the covering means 3.

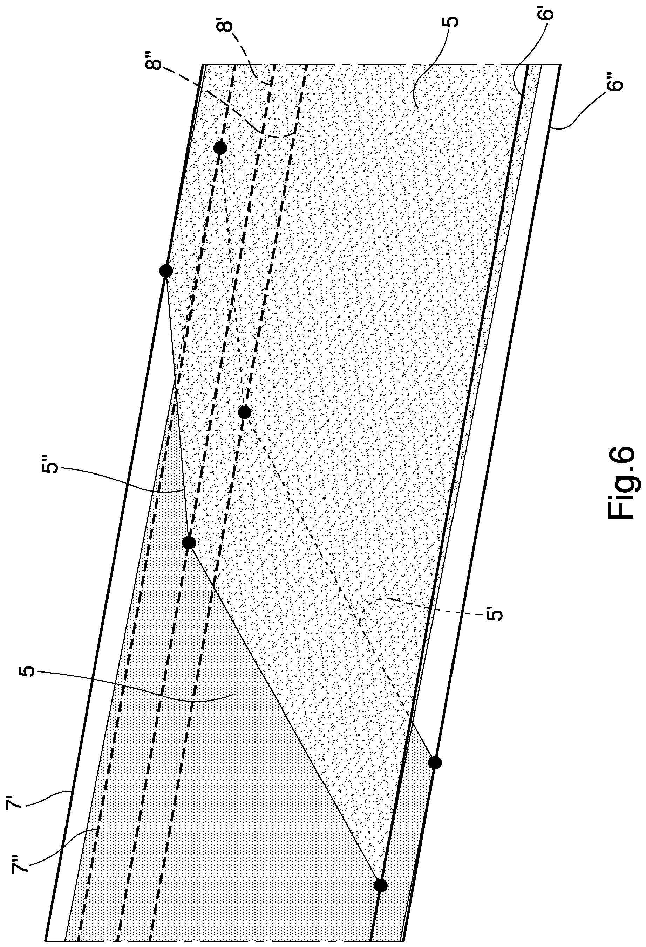

Advantageously, as schematically shown in Figure 6, once the sheets 5 have been extended, the ends 5', 5" of the adjacent sheets 5 partly overlap, ensuring effective coverage and avoiding any infiltration of water.

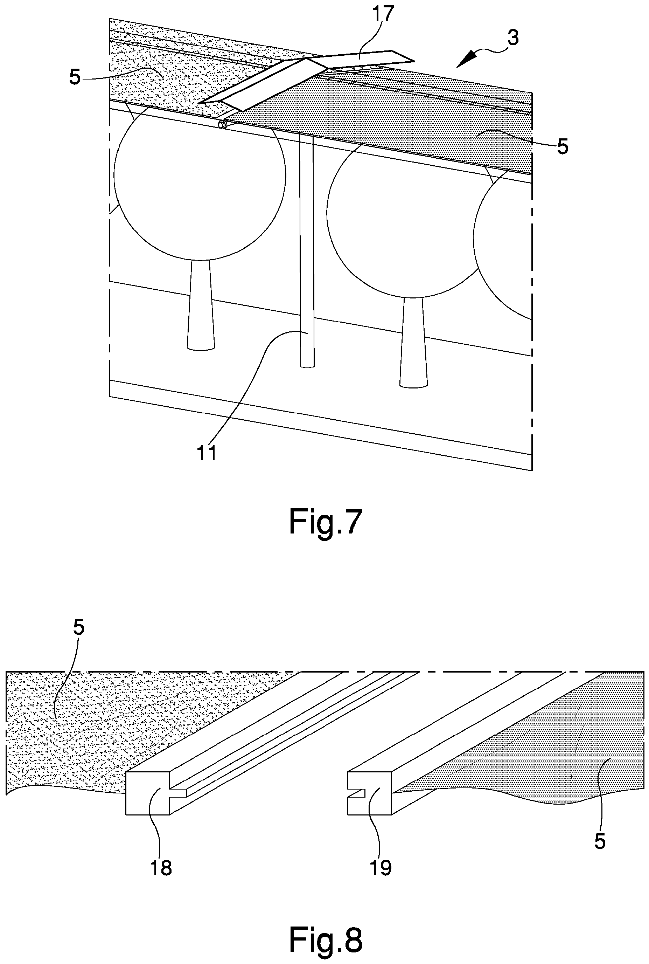

With reference to a possible further embodiment, shown in Figure 7, the covering means 3 comprise at least one fixed cover 17, positioned at the point where the sheets 5, once extended, approach to each other.

This fixed cover 17 allows further increasing the seal of the covering means 3, further reducing the risk of any infiltration of water.

With reference to a possible further embodiment, shown in Figure 8, each of the sheets 5 is provided at their respective ends with coupling means 18, 19 adapted to ensure better seal, once the sheets 5 have been extended.

It has in practice been found that the described invention achieves the intended objects.

In particular, it should be noticed that the removable covering system according to the invention makes it possible to simplify and speed up considerably the positioning and removal operations of the covers.

In fact, the presence of several small sheets and of special movement means allows the coverage of an entire row in a few seconds, regardless of the length of the row itself.

Moreover, the presence of several small sheets, as an alternative to the use of an individual sheet, makes it possible to simplify and speed up considerably the maintenance and replacement operations of the cover.

## Claims

1. Removable covering system (1) for fruit crops or the like, comprising a series of sustaining elements (2) arranged spaced apart from each other and substantially aligned along at least one row (F) of a fruit crop or the like to be protected, covering means (3) supported by said sustaining elements (2) and movement means (4) of said covering means (3) for the positioning on top of said at least one row (F), **characterized by** the fact that said covering means (3) comprise a plurality of sheets (5) arranged sequentially along said row (F), operatively connected to said movement means (4) and movable between an extended position, in which each of said sheets (5) extends along a respective section of said row (F) to define a substantially continuous covering over the entire row (F), and a retracted position, in which each of said sheets (5) is retracted at a respective section of said row (F) and said row (F) is substantially uncovered.

2. System (1) according to claim 1, **characterized by** the fact that said movement means (4) move said sheets (5) between said extended position and said retracted position along a direction of extension of said rows (F).

3. System (1) according to one or more of the preceding claims, **characterized by** the fact that said movement means (4) comprise at least one cable (6, 7, 8) supported in a sliding manner by said sustaining elements (2) and associated with each of said sheets (5) and traction means (9, 10) of said at least one cable (6, 7, 8) for the positioning of said sheets (5) between said extracted position and said retracted position.

4. System (1) according to claim 3, **characterized by** the fact that each of said sheets (5) has an end fixed onto a respective sustaining element (2) of said series of sustaining elements (2) and an opposite end fixed onto said at least one cable (6, 7, 8).

5. System (1) according to one or more of the preceding claims, **characterized by** the fact that each of said sheets (5) associated with said series of sustaining elements (2) and arranged on said row (F) has the same dimensions.

6. System (1) according to one or more of the preceding claims, **characterized by** the fact that said traction means (9, 10) comprise at least one axially rotatable drum (9) and at least one motor (10) for driving said drum (9) in rotation, said at least one cable (6, 7, 8) being partly wound around said drum (9) and said motor (10) being adapted to drive the drum (9) in rotation in one direction to bring the sheets (5) from the retracted position to the extended position and in the opposite direction to bring said sheets (5) from the extended position to the retracted position.

7. System (1) according to one or more of the preceding claims, **characterized by** the fact that said movement means (4) comprise a first cable (6) associated with a first lateral portion of each of said sheets (5) and a second cable (7) associated with a second lateral portion of said sheets (5).

8. System (1) according to claim 7, **characterized by** the fact that said movement means (4) comprise a third cable (8) associated with a substantially intermediate portion of said sheets (5), said third cable (8) being at a higher level than said first cable (6) and said second cable (7).

9. System (1) according to claim 8, **characterized by** the fact that said first cable (6), said second cable (7) and said third cable (8) are partly wound around said drum (9) and operable in traction at the same time by said motor (10).

10. System (1) according to one or more of the preceding claims, **characterized by** the fact that each of said sustaining elements (2) comprises at least one vertical sustaining pole (11).

11. System (1) according to one or more of the preceding claims, **characterized by** the fact that each of said sustaining elements (2) comprises at least one upper structure (12) provided with fixing points of said sheets (5).

12. System (1) according to claim 11, **characterized by** the fact that said upper structure (12) comprises sliding means (13, 14, 15) for sliding said at least one cable (6, 7, 8).

13. System (1) according to one or more of the preceding claims, **characterized by** the fact that it comprises at least one weather control unit (16) operatively connected to said movement means (4).

14. System (1) according to one or more of the preceding claims, **characterized by** the fact that said movement means (4) comprise at least one pair of cables (6, 7, 8) operatively connected to said traction means (9, 10) and movable at the same time along opposite directions for the positioning of said sheets (5) between said extracted position and said retracted position.

15. System (1) according to claim 14, **characterized by** the fact that each of said sheets (5) has a first end (5') connected to at least one upper cable (6', 7', 8') of said at least one pair of cables (6, 7, 8), movable along a first direction, and a second end (5") connected to at least one lower cable (6", 7", 8") of said at least one pair of cables (6, 7, 8), movable along a second direction opposite to the first direction.
